# EUROPÄISCHE PATENTANMELDUNG

(11) **EP 2 248 708 A2**
(43) Veröffentlichungstag der Anmeldung: **10.11.2010**
(21) Anmeldenummer: 10156289.0
(22) Anmeldetag: 12.03.2010
(51) Int. Cl.: B62D 5/04, B62D 7/08

(54) **Lenkbare Fahrzeugachse**

(30) Priorität: 08.05.2009 DE 102009002934
(71) Anmelder: ZF Friedrichshafen AG, 88038 Friedrichshafen (DE)
(72) Erfinder: Scharfenberg, Stephan, 99869, Friemar (DE); Bald, Dirk, 99867, Gotha (DE)

(57) **Zusammenfassung**

Es wird eine lenkbare Fahrzeugachse für ein Nutzfahrzeug mit einer Achsbrücke (1) vorgeschlagen, an deren Enden jeweils ein über eine Spurstange (7) lenkbarer Achskopf (5, 6) gelagert ist, wobei die Spurstange (7) über zumindest einen Antrieb bewegbar ist, und wobei als Antrieb wenigstens ein Elektromotor (10) mit zumindest einem Getriebe (11) vorgesehen ist, sodass der Elektromotor (10) versetzt oder in einem vorbestimmten Winkel zur Spurstange (7) anordenbar ist.

## Beschreibung

Die vorliegende Erfindung betrifft eine lenkbare Fahrzeugachse für ein Nutzfahrzeug gemäß der im Oberbegriff des Patentanspruches 1 näher definierten Art.

Derartige lenkbare Fahrzeugachsen können bevorzugt zum Beispiel bei Gegengewichtstaplern oder auch bei so genannten Schleppern eingesetzt werden. Üblicherweise ist bei solchen Fahrzeugen eine zentrale Hydraulikpumpe zum Lenken und Heben vorgesehen, mit der auch die hydraulisch betätigbare Lenkachse mit Druckmittel versorgt wird.

Beispielsweise aus der Druckschrift US 5 094 312 ist eine hydraulisch betätigte lenkbare Achse für ein Fahrzeug bekannt. Die bekannte Fahrzeugachse umfasst einen doppelseitig wirkenden Zylinder, der an einer Achsbrücke der Fahrzeugachse befestigt ist. Der Zylinder betätigt zwei Verbindungsstangen, die jeweils mit einem Achskopf verbunden sind, so dass über den Zylinder eine Lenkbewegung an der Fahrzeugachse ausführbar ist. Eine weitere hydraulisch betätigte, lenkbare Fahrzeugachse ist aus der Druckschrift DE 10 2004 014 106 A1 bekannt.

Es hat sich gezeigt, dass ein groß dimensioniertes Hydraulikaggregat für den hydraulischen Antrieb notwendig ist, wodurch ein hoher Energieverlust aufgrund hoher Umwandlungsverluste und damit ein schlechter Wirkungsgrad auch bei dem Lenkantrieb der bekannten Fahrzeugachse realisiert werden. Zudem treten bei der offenbarten Fahrzeugachse Leckagen auf. Darüber hinaus kann bei der hydraulischen Betätigung die Anordnung bezogen auf die Spurstange aufgrund der festgelegten Anordnungsposition des Hydraulikzylinders nicht variiert werden, welches sich nachteilig auf den erforderlichen Baumraumbedarf und auf die Anpassbarkeit an eine vorhandene Einbausituation auswirkt.

Der vorliegenden Erfindung liegt die Aufgabe zu Grunde, eine lenkbare Fahrzeugachse der eingangs beschriebenen Gattung vorzuschlagen, welche insbesondere hinsichtlich des Wirkungsgrades und der Anpassbarkeit an eine vorhandene Einbausituation weiter verbessert wird.

Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Demnach wird eine lenkbare Fahrzeugachse für ein Nutzfahrzeug, insbesondere für einen Gegengewichtstapler oder einen Schlepper, mit einer Achsbrücke vorgeschlagen, an deren Enden jeweils ein über eine Spurstange lenkbarer Achskopf gelagert ist, wobei die Spurstange über zumindest einen Antrieb bewegbar ist und wobei als Antrieb ein Elektromotor mit zumindest einem Getriebe vorgesehen ist, sodass der Elektromotor versetzt oder winklig zur Spurstange angeordnet werden kann.

Aufgrund des verwendeten elektrischen Antriebes ergibt sich ein geringer Energieverlust, da die elektrische Energie direkt in mechanische Energie umgewandelt wird. Dadurch wird ein besserer Wirkungsgrad erzielt und zudem werden im Gegensatz zur hydraulischen Betätigung keine Leckagen erzeugt. Dadurch, dass der Elektromotor versetzt oder auch in einem vorbestimmten Winkel zur Spurstange angeordnet werden kann, ergibt sich eine verbesserte Anpassbarkeit bzw. Variabilität an eine vorgegebene Einbausituation und zudem eine bauraumsparende Anordnung.

Beispielsweise kann eine parallele Anordnung des Elektromotors zur Spurstange dadurch realisiert werden, dass als Getriebe ein Stirnradgetriebe verwendet wird. Somit kann der Elektromotor quer zur Fahrtrichtung des Fahrzeuges ausgerichtet sein. Es ist jedoch auch möglich, dass eine winklige Anordnung des Elektromotors zur Spurstange durch die Verwendung eines Kegelradgetriebes, eines Schneckengetriebes oder dergleichen realisiert wird. Auf diese Weise kann der Elektromotor längs zur Fahrtrichtung angeordnet werden.

Im Rahmen einer besonders vorteilhaften Ausführungsvariante der Erfindung kann bei der Verwendung eines Stirnradgetriebes vorgesehen sein, dass der Elektromotor über eine Stirnradstufe des Stirnradgetriebes mit der als Gewindespindel ausgebildeten Spurstange gekoppelt wird, so dass eine translatorische Bewegung der Spurstange ausgeführt werden kann, um eine Lenkbewegung auf die Achsköpfe der vorgeschlagenen lenkbaren Fahrzeugachse zu übertragen.

Vorzugsweise kann bei der parallelen Anordnung die Motorwelle des Elektromotors mit einem Stirnrad der Stirnradstufe verbunden und ein weiteres Stirnrad der Stirnradstufe als Spindelmutter oder dergleichen ausgebildet sein, die mit der als Gewindespindel ausgebildeten Spurstange in Eingriff stehen, um die Drehbewegung in einer translatorische Bewegung umzusetzen.

Im Gegensatz zu einer koaxialen Anordnung des Elektromotors zur Spurstange ergibt sich bei der parallelen beziehungsweise versetzten Anordnung des Elektromotors zur Spurstange der Vorteil, dass weniger Bauteile erforderlich sind.

Bei der Verwendung des Spindeltriebes kann als Gewinde an der Gewindespindel ein Kugelgewinde, ein Trapezgewinde oder dergleichen vorgesehen sein. Es sind aber auch andere Gewindeausführungen möglich. Darüber hinaus ist es auch denkbar, dass anstelle des Spindeltriebes andere mechanische Übertragungsmöglichkeiten eingesetzt werden.

Bei der erfindungsgemäßen Fahrzeugachse ergibt sich ein weiterer Vorteil dadurch, dass die Achsbrücke der Fahrzeugachse gleichzeitig das Gehäuse des Elektromotors und auch des Getriebes bildet. Dadurch können weitere Bauteile und auch weiterer Bauraum eingespart werden.

Bei der vorgeschlagenen elektrisch betätigten Lenkung der Fahrzeugachse kann bevorzugt eine elektronische Übertragung der Lenkbewegungen von dem Lenkrad des Fahrzeuges zur Spurstange realisiert werden. Dadurch kann eine so genannte "by wire"-Lenkung ohne eine mechanische Verbindung zum Lenkrad realisiert werden.

Als Elektromotoren können bei der erfindungsgemäßen lenkbaren Fahrzeugachse zum Beispiel ein Wechselstrom-, ein Gleichstrom-, ein Synchron- und/oder ein Torquemotor oder dergleichen verwendet werden. Als Torquemotor wird üblicherweise ein direkt angetriebener Rundmotor bezeichnet.

Nachfolgend wird die vorliegende Erfindung anhand der Zeichnungen weiter erläutert. Es zeigen:
- Figur 1: eine Draufsicht auf eine mögliche Ausführungsvariante einer erfin- dungsgemäßen lenkbaren Fahrzeugachse; und
- Figur 2: eine teilgeschnittene Ansicht der lenkbaren Fahrzeugachse gemäß Figur 1.

In den Figuren ist eine mögliche Ausführungsvariante einer lenkbaren Fahrzeugachse exemplarisch dargestellt. Die Fahrzeugachse kann vorzugsweise bei Nutzfahrzeugen, wie z. B. Gegengewichtstaplern, Schleppern oder dergleichen eingesetzt werden. Es sind aber auch andere Einsatzmöglichkeiten denkbar. Gleiche Bauteile sind mit den gleichen Bezugszeichen in den Figuren bezeichnet.

Die vorgeschlagene Fahrzeugachse umfasst eine Achsbrücke 1, die über eine zentrale Rahmenbefestigung 2 an einem nicht weiter dargestellten Fahrzeug befestigt wird. An jedem Ende der Achsbrücke 1 ist über ein Drehgelenk 3, 4 ein Achskopf 5, 6 jeweils mit einer Radnabe 15, 16 lenkbar gelagert. Jeder Achskopf 5, 6 ist mit einem Ende einer Spurstange 7 gekoppelt. Dazu ist an jedem Ende der Spurstange 7 ein Spurstangenkopf 8, 9 vorgesehen, so dass eine translatorische Bewegung der Spurstange 7 über das zugeordnete Drehgelenk 3, 4 in eine Lenkbewegungen bei der Fahrzeugachse umgewandelt wird.

Erfindungsgemäß ist vorgesehen, dass als Antrieb beziehungsweise zum Betätigen der Spurstange 7 bei der vorgeschlagenen Fahrzeugachse ein Elektromotor 10 mit einem Getriebe verwendet wird, wobei bei dem gezeigten Ausführungsbeispiel als Getriebe ein Stirnradgetriebe 11 verwendet wird. Auf diese Weise ist der Elektromotor 10 parallel versetzt zur Spurstange 7 angeordnet. Mit dem Elektromotor 10 kann über das Stirnradgetriebe 11 die Spurstange 7 zum Ausführen der Lenkbewegungen elektrisch bewegt werden.

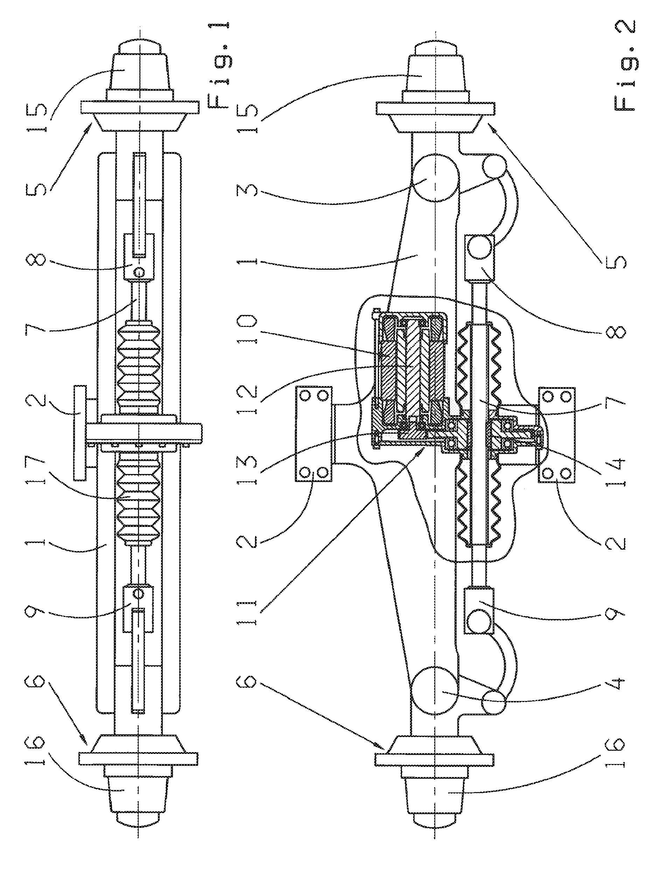

Der Elektromotor 10 ist über eine Stirnradstufe des Stirnradgetriebes 11 mit der als Gewindespindel ausgebildeten Spurstange 7 gekoppelt, so dass eine translatorische Bewegung der Spurstange 7 ausgeführt werden kann, welches insbesondere aus Figur 2 ersichtlich ist. Die Motorwelle 12 ist mit einem Stirnrad 13 der Stirnradstufe verbunden. Das weitere Stirnrad der Stirnradstufe ist als Spindelmutter 14 ausgebildet, die mit der als Gewindespindel ausgebildeten Spurstange 7 in Eingriff steht, so dass eine Lenkbewegung in die eine oder andere Richtung je nach Drehrichtung des Elektromotors 10 realisiert wird.

Die Achsbrücke 1 bildet gleichzeitig das Gehäuse des Elektromotors 10 und des Stirnradgetriebes 11, so dass separate Gehäuse als Bauteile eingespart werden können. Die Gewindespindel beziehungsweise die Spurstange 7 ist mit einem Faltenbalg 17 zum Schutz vor Verschmutzungen versehen.

Bezugszeichen
- 1: Achsbrücke
- 2: Rahmenbefestigung
- 3: Drehgelenk
- 4: Drehgelenk
- 5: Achskopf
- 6: Achskopf
- 7: Spurstange
- 8: Spurstangenkopf
- 9: Spurstangenkopf
- 10: Elektromotor
- 11: Stirnradgetriebe
- 12: Motorwelle
- 13: Stirnrad
- 14: Spindelmutter
- 15: Radnabe
- 16: Radnabe
- 17: Faltenbalg

## Patentansprüche

1. Lenkbare Fahrzeugachse für ein Nutzfahrzeug mit einer Achsbrücke (1), an deren Enden jeweils ein über eine Spurstange (7) lenkbarer Achskopf (5, 6) gelagert ist, wobei die Spurstange (7) über zumindest einen Antrieb bewegbar ist, **dadurch gekennzeichnet, dass** als Antrieb wenigstens ein Elektromotor (10) mit zumindest einem Getriebe (11) vorgesehen ist, sodass der Elektromotor (10) versetzt oder in einem vorbestimmten Winkel zur Spurstange (7) anordenbar ist.

2. Lenkbare Fahrzeugachse nach Anspruch 1, **dadurch gekennzeichnet, dass** als Getriebe ein Stirnradgetriebe (11) vorgesehen ist, so dass der Elektromotor (10) parallel zur Spurstange (7) angeordnet ist.

3. Lenkbare Fahrzeugachse nach einem der vorangehenden Ansprüche, **dadurch gekennzeichnet, dass** als Getriebe ein Kegelradgetriebes oder ein Schneckengetriebe vorgesehen ist, so dass der Elektromotor (10) in einem vorbestimmten Winkel zur Spurstange (7) angeordnet ist.

4. Lenkbare Fahrzeugachse nach einem der vorangehenden Ansprüche, **dadurch gekennzeichnet, dass** der Elektromotor (10) über eine Stirnradstufe des Stirnradgetriebes (11) mit der als Gewindespindel ausgebildeten Spurstange (7) gekoppelt ist, so dass eine translatorische Bewegung der Spurstange (7) ausführbar ist.

5. Lenkbare Fahrzeugachse nach Anspruch 4, **dadurch gekennzeichnet, dass** die Motorwelle (12) des Elektromotors (10) mit einem Stirnrad (13) der Stirnradstufe verbunden ist, und dass ein weiteres Stirnrad der Stirnradstufe als Spindelmutter (14) ausgebildet ist, die mit der als Gewindespindel ausgebildeten Spurstange (7) in Eingriff steht.

6. Lenkbare Fahrzeugachse nach Anspruch 5, **dadurch gekennzeichnet, dass** die Spurstange (7) ein Kugelgewinde oder ein Trapezgewinde aufweist.

7. Lenkbare Fahrzeugachse nach einem der vorangehenden Ansprüche, **dadurch gekennzeichnet, dass** die Achsbrücke (1) das Gehäuse des Elektromotors (10) und/oder des Stirnradgetriebes (11) bildet.

8. Lenkbare Fahrzeugachse nach einem der vorangehenden Ansprüche, **dadurch gekennzeichnet, dass** eine elektronische Übertragung der Lenkbewegungen von dem Lenkrad des Fahrzeuges zur Spurstange (7) vorgesehen ist.

9. Lenkbare Fahrzeugachse nach einem der vorangehenden Ansprüche, **dadurch gekennzeichnet, dass** als Elektromotor ein Wechselstrom-, Gleichstrom-, Synchron- und/oder Torquemotor verwendbar ist.
